# EUROPEAN PATENT APPLICATION

(11) **EP 4 797 407 A1**
(43) Date of publication of application: **26.08.2026**
(21) Application number: 25867256.7
(22) Date of filing: 11.08.2025
(51) Int. Cl.: H01M 50/244, H01M 50/258, H01M 50/59, H01M 50/588, H01M 50/296

(54) **BATTERY CELL ASSEMBLY, AND BATTERY PACK AND VEHICLE INCLUDING SAME**

(30) Priority: 21.10.2024 KR 20240143591
(71) Applicant: LG ENERGY SOLUTION, LTD., Seoul 07335 (KR)
(72) Inventor: NAM, Jinsik, Daejeon 34122 (KR); YOO, Inseok, Daejeon 34122 (KR)
(74) Representative: Goddar, Heinz J.
(86) International application number: PCT/KR2025/012111
(87) International publication number: WO 2026/089232

(57) **Abstract**

A battery cell assembly according to an exemplary embodiment of the present disclosure includes: a cell frame configured to accommodate a battery cell therein; an internal connection terminal electrically connected to the battery cell and exposed to the outside through a side surface of the cell frame; a terminal cover configured to be detachably mounted to the side surface of the cell frame and to cover the internal connection terminal; and an external connection terminal mounted on the terminal cover and having a rear end portion connected to the internal connection terminal at the rear of the terminal cover and a front end portion exposed forward of the terminal cover. The terminal cover may be formed in one of at least two types with different mounting positions of the external connection terminal and may be selectively mounted to the cell frame.

## Description

### CROSS-REFERENCE TO RELATED APPLICATIONS

This application claims benefit and priority to Korean Patent Application No. KR 10-2024-0143591, filed on October 21, 2024, with the Korean Intellectual Property Office, the disclosure of which is incorporated herein in its entirety by reference.

### TECHNICAL FIELD

The present disclosure relates to a battery cell assembly, and more particularly, to a battery cell assembly configured such that positions of connection terminals do not overlap when battery cell assemblies are stacked in multiple stages, and a battery pack and a vehicle including the battery cell assembly.

### BACKGROUND

Batteries are attracting attention as a power source for electric vehicles (EVs), hybrid electric vehicles (HEVs), and plug-in hybrid electric vehicles (Plug-In HEVs), and the like that are being proposed as a solution to air pollution caused by existing gasoline and diesel vehicles that use fossil fuels, and related research and development is actively underway.

Secondary batteries that are repeatedly chargeable and dischargeable are mainly adopted as batteries used in electric vehicles and the like.

Currently widely used secondary batteries include lithium-ion batteries, lithium polymer batteries, nickel-cadmium batteries, nickel-metal hydride batteries, and nickel-zinc batteries. An operating voltage of such a unit secondary battery cell (i.e., a unit battery cell) is about 2.5 V to 4.6 V. When a higher output voltage is required, a plurality of battery cells may be connected in series to configure a battery pack. In addition, a plurality of battery cells may be connected in parallel to configure a battery pack according to the charge/discharge capacity required for a battery pack. The number of battery cells configuring the battery pack may be set variously according to the required output voltage or charge/discharge capacity.

When configuring a battery pack by connecting a plurality of battery cells in series or in parallel, it is common to first configure a battery cell assembly including the battery cells, and then configure a battery pack including the battery cell assembly.

An example of a method of configuring a plurality of battery cell assemblies into a single battery pack is to stack battery cell assemblies in multiple stages in a pack case and then electrically connect them. Each battery cell assembly may be provided with an L busbar for electrical connection.

In the case of the battery cell assembly of the related art, the L busbars are provided at the same position on a side of a module. Therefore, when battery cell assemblies of the same type are stacked in multiple stages, the positions of the L busbars of the lower-layer cell assembly and the upper-layer cell assembly overlap each other, making electrical connection difficult.

Accordingly, in the related art, there is an example in which two types of battery cell assemblies with different positions of the L busbars are provided and arranged in the upper and lower layers, thereby facilitating electrical connection. However, providing two types of the battery cell assemblies complicates production and management and leads to increased costs.

### SUMMARY

The present disclosure has been made in view of the problems of the related art described above, and an object thereof is to provide a battery cell assembly capable of being configured such that, when stacking battery cell assemblies in multiple stages, the assemblies can be commonly used while ensuring that only positions of connection terminals do not overlap, and a battery pack and a vehicle including the battery cell assembly.

To achieve the above object, a battery cell assembly according to a preferred exemplary embodiment of the present disclosure includes: a cell frame configured to accommodate one or more battery cells therein; an internal connection terminal electrically connected to the battery cells and exposed to the outside through a side surface of the cell frame; a terminal cover configured to be detachably mounted to the side surface of the cell frame and to cover the internal connection terminal; and an external connection terminal mounted on the terminal cover and having a rear end portion connected to the internal connection terminal at the rear of the terminal cover and a front end portion exposed forward of the terminal cover. The terminal cover may be formed in one of at least two types with different mounting positions of the external connection terminal and may be selectively mounted to the cell frame.

The terminal cover is an insulating cover configured to block the internal connection terminal from the outside.

A terminal exposure portion having a groove shape and configured to expose the internal connection terminal to the outside is formed on the side surface of the cell frame.

The external connection terminal includes a first connection portion connected to the internal connection terminal, and a second connection portion connected to the first connection portion and exposed forward of the terminal cover.

The external connection terminal is an L-shaped busbar.

The terminal cover is provided in one of two types of a left type in which the external connection terminal is arranged on a left side, and a right type in which the external connection terminal is arranged on a right side, with either type selectively covering the internal connection terminal.

The terminal cover includes a plate-shaped cover portion configured to cover the terminal exposure portion and having a terminal through hole formed therein through which the second connection portion passes from the rear to the front, and a terminal fastening portion protruding forward from a front surface of the cover portion, the second connection portion being fastened to the terminal fastening portion.

The terminal cover is detachably fixed to the cell frame by a bolt-type fastening member.

The terminal cover is formed with a first bolt through hole through which a threaded portion of the fastening member passes, and the terminal exposed portion is formed with a bolt fastening portion to which the threaded portion is screw-fastened.

The external connection terminal is formed with a second bolt through hole through which the threaded portion of the fastening member passes, and the threaded portion of the fastening member passes through the first and second bolt through holes in sequence and is then fastened to the bolt fastening portion.

The bolt fastening portion is provided as a pair and is formed symmetrically in a left-and-right direction in the terminal exposure portion.

The left-type terminal cover and the external connection terminal are fastened to a left bolt fastening portion of the pair of bolt fastening portions, and the right-type terminal cover and the external connection terminal are fastened to a right bolt fastening portion of the pair of bolt fastening portions.

According to the battery cell assembly of the present disclosure, and the battery pack and the vehicle including the same, the terminal cover on which the external connection terminal is mounted is detachably mounted at the same position of the cell frame. In this case, the terminal cover is formed in one of at least two types with different mounting positions of the external connection terminal so as to be selectively mounted to the cell frame. As a result, when the battery cell assemblies are stacked vertically, the positions of the external connection terminals provided in the upper-layer and lower-layer battery cell assemblies do not match each other and are misaligned, thereby allowing an external component to be easily connected to the external connection terminal.

The foregoing summary is illustrative only and is not intended to be in any way limiting. In addition to the illustrative aspects, exemplary embodiments, and features described above, further aspects, exemplary embodiments, and features will become apparent by reference to the drawings and the following detailed description.

### BRIEF DESCRIPTION OF THE DRAWINGS

FIG. 1 is a view illustrating a vehicle according to an exemplary embodiment of the present disclosure.
FIG. 2 is a perspective view of a battery pack according to an exemplary embodiment of the present disclosure.
FIG. 3 is an exploded perspective view of the battery pack according to an exemplary embodiment of the present disclosure.
FIG. 4 is a partially enlarged view of FIG. 3.
FIG. 5 is a front view of a part of FIG. 3.
FIG. 6 is a plan view of a part of FIG. 3.
FIG. 7 is a perspective view illustrating a state in which a right-type terminal cover is mounted to a cell frame.
FIG. 8 is a perspective view illustrating a state in which the right-type terminal cover and an external connection terminal in FIG. 7 are separated from the cell frame.
FIG. 9 is a view illustrating a state in which an internal connection terminal is removed from the cell frame.
FIG. 10 is a perspective view of the internal connection terminal.
FIGS. 11 and 12 are perspective views of a terminal cover.
FIG. 13 is a perspective view of the external connection terminal.
FIG. 14 is a cross-sectional view illustrating a state in which the terminal cover is mounted to the cell frame.

### DETAILED DESCRIPTION

In the following detailed description, reference is made to the accompanying drawing, which forms a part hereof. The illustrative exemplary embodiments described in the detailed description, drawing, and claims are not meant to be limiting. Other exemplary embodiments may be utilized, and other changes may be made, without departing from the spirit or scope of the subject matter presented here.

Hereinafter, a battery cell assembly according to a preferred exemplary embodiment of the present disclosure, and a battery pack and a vehicle including the same will be described in detail with reference to the accompanying drawings.

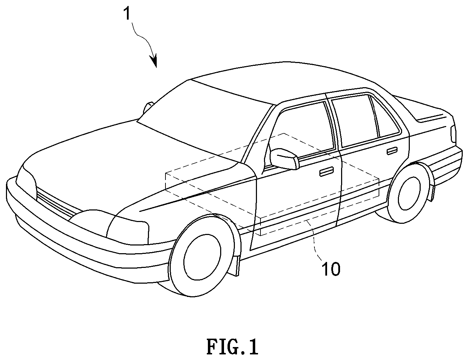

FIG. 1 is a view illustrating a vehicle according to an exemplary embodiment of the present disclosure.

A vehicle 1 according to an exemplary embodiment of the present disclosure may be an electric vehicle or a hybrid electric vehicle, and may include one or more battery packs 10. The battery pack 10 can supply electric energy required for various operations of the vehicle 1. In addition, the vehicle 1 according to an exemplary embodiment of the present disclosure may further include various other components included in the vehicle 1, in addition to the battery pack 10. For example, the vehicle 1 according to an exemplary embodiment of the present disclosure may further include a vehicle body, a motor, a control device such as an ECU (electronic control unit), and the like.

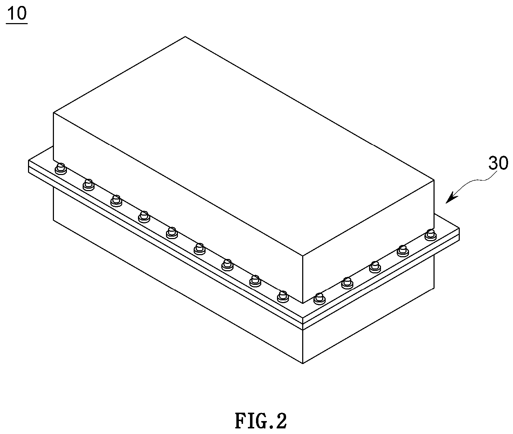

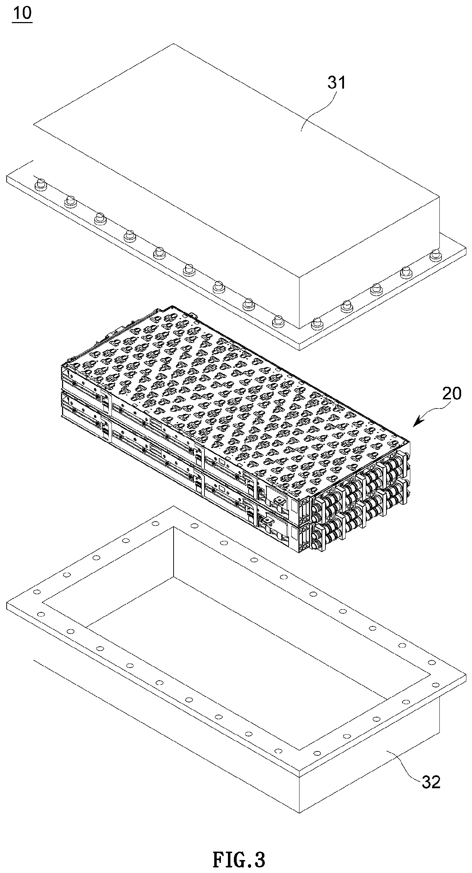

FIG. 2 is a perspective view of a battery pack according to an exemplary embodiment of the present disclosure, and FIG. 3 is an exploded perspective view of the battery pack according to an exemplary embodiment of the present disclosure.

The battery pack 10 according to an exemplary embodiment of the present disclosure may include a plurality of battery cell assemblies 20 and a pack case 30 that accommodates the battery cell assemblies 20. The pack case 30 may include upper and lower cases 31 and 32. Furthermore, the battery pack 10 may further include various other components, in addition to the battery cell assembly 20, for example, components of the battery pack 10 known at the time of filing of the present disclosure, such as a BMS, a pack case, a relay, and a current sensor.

As described above, the battery pack 10 according to an exemplary embodiment of the present disclosure may be applied to an electric vehicle or a hybrid electric vehicle, may also be applied to various electric devices or electric systems as well as various vehicles equipped with a battery pack as a fuel source, and may also be provided in an ESS (Energy Storage System).

Note that, according to the battery pack 10 of an exemplary embodiment of the present disclosure, the plurality of battery cell assemblies 20 may be stacked vertically in the pack case 30.

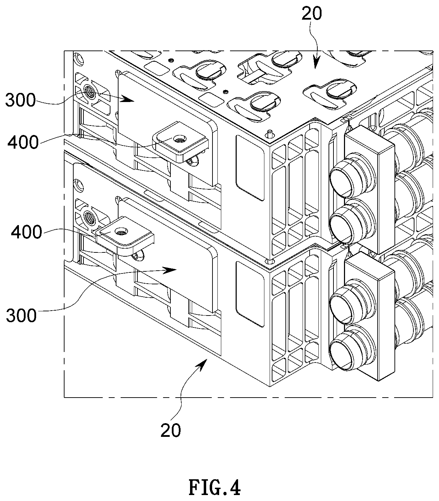

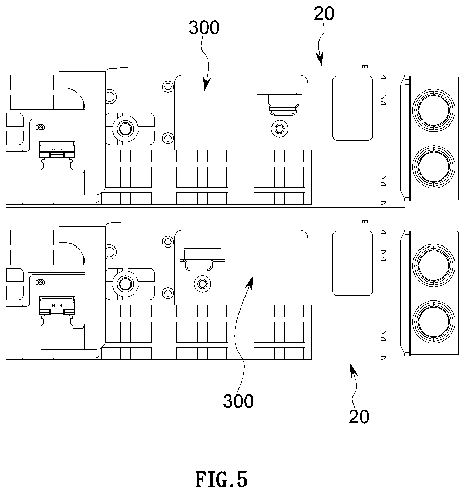

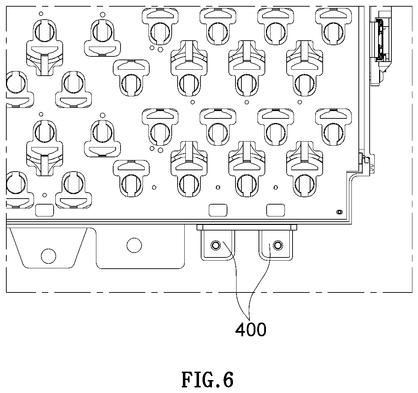

FIG. 4 is a partially enlarged view of FIG. 3, FIG. 5 is a front view of a part of FIG. 3, and FIG. 6 is a plan view of a part of FIG. 3.

As illustrated, the plurality of battery cell assemblies 20 may be stacked vertically, and the upper-layer battery cell assembly 20 and the lower-layer battery cell assembly 20 may be arranged such that external connection terminals 400 described below are positioned in a left-right staggered manner. That is, in the drawing, the external connection terminal 400 of the upper-layer battery cell assembly 20 may be arranged on the right side, and the external connection terminal 400 of the lower-layer battery cell assembly 20 may be arranged on the left side.

As such, the external connection terminals 400 of the upper-layer battery cell assembly 20 and the lower-layer battery cell assembly 20 are arranged in a left-right staggered manner, whereby external components can be easily electrically connected to the external connection terminals 400.

To realize such a stacked structure, in the present disclosure, a terminal cover 300 described below on which the external connection terminal 400 is mounted is detachably mounted at the same position of a cell frame 100. In this case, the terminal cover 300 is manufactured in a left type in which the external connection terminal 400 is arranged on a left side or a right type in which the external connection terminal 400 is arranged on a right side, so as to allow either of these two types to be selectively mounted to the cell frame 100. This will be described in detail below. The terminal cover 300 is not limited to the two types of left type and right type, and may also be manufactured in more types.

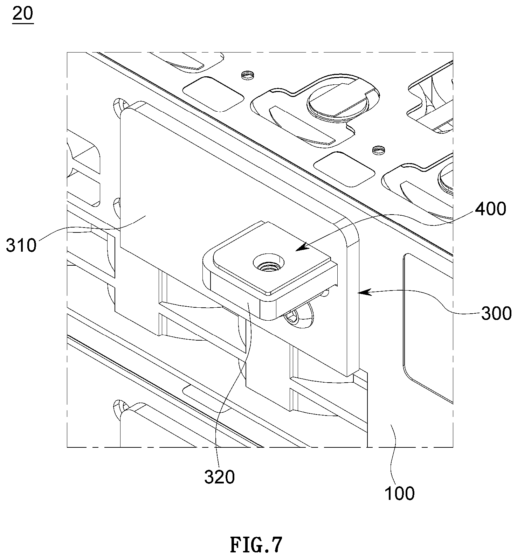

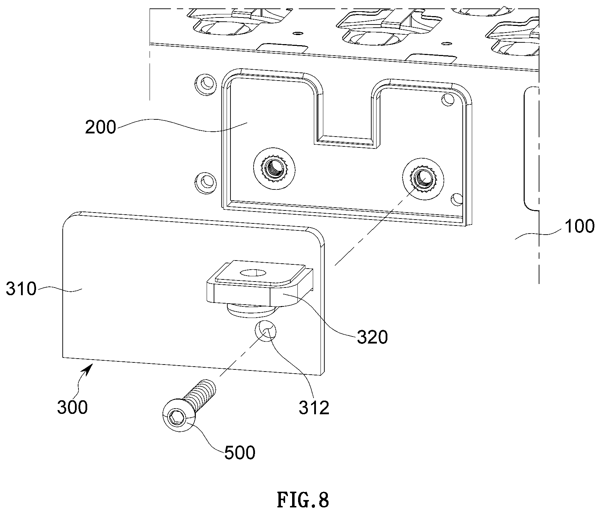

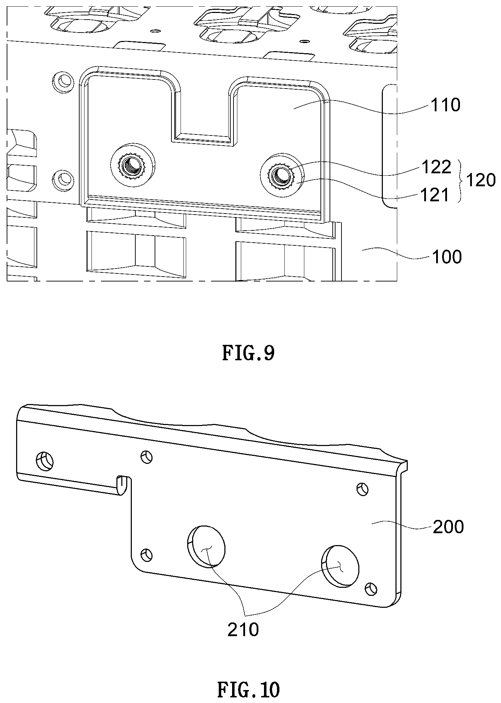

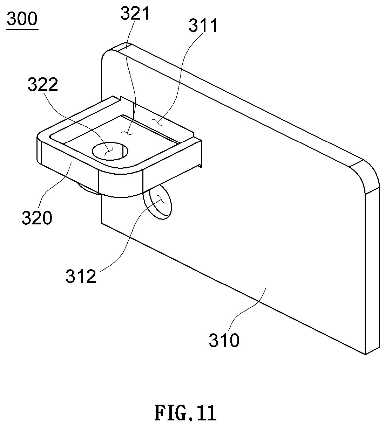

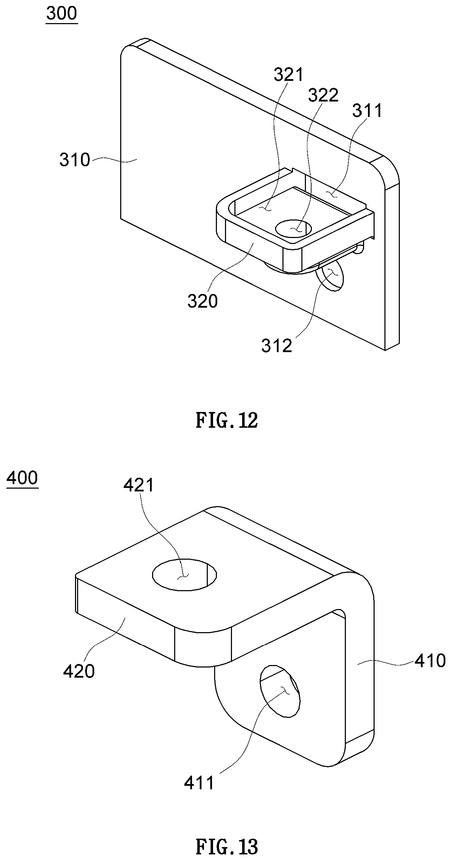

FIG. 7 is a perspective view illustrating a state in which the right-type terminal cover is mounted to the cell frame, FIG. 8 is a perspective view illustrating a state in which the right-type terminal cover and the external connection terminal in FIG. 7 are separated from the cell frame, FIG. 9 is a view illustrating a state in which an internal connection terminal is removed from the cell frame, FIG. 10 is a perspective view of the internal connection terminal, FIGS. 11 and 12 are perspective views of a terminal cover, and FIG. 13 is a perspective view of the external connection terminal.

The battery cell assembly 20 according to an exemplary embodiment of the present disclosure includes the cell frame 100, an internal connection terminal 200, the terminal cover 300, and the external connection terminal 400. The cell frame 100 and the terminal cover 300 may be molded from a synthetic resin material for insulation, and the internal connection terminal 200 and the external connection terminal 400 may be molded from a conductive metal material.

The cell frame 100 may accommodate a battery cell therein and may have a groove-shaped terminal exposure portion 110 provided on one side surface in order to expose the internal connection terminal 200 to the outside. The internal connection terminal 200 may be embedded in the cell frame 100 when forming the cell frame 100.

A pair of bolt fastening portions 120 to which bolt-type fastening bolts 500 are fastened may be provided in the terminal exposure portion 110. The bolt fastening portion 120 may be formed integrally with a bottom surface of the terminal exposed portion 110, and may include a hollow circular protrusion 121 and a nut 122 inserted and fixed in the circular protrusion 121. A height of the bolt fastening portion 120 may be formed to be equal to a depth of the terminal exposure portion 110. The terminal exposure portion 110 may be formed symmetrically in a left-and-right direction, and the bolt fastening portions 120 may be provided symmetrically in the left-and-right direction on the left and right sides of the terminal exposure portion 110.

The internal connection terminal 200 may be electrically connected to the battery cell accommodated in the cell frame 100, and may be embedded in a side surface of the cell frame 100 when forming the cell frame 100. A portion of the internal connection terminal 200 may be positioned in the terminal exposure portion 110 and exposed to the outside of the cell frame 100.

The internal connection terminal 200 is formed with a pair of fastening portion through holes 210 spaced apart in the left-and-right direction, through which the pair of bolt fastening portions 120 provided in the terminal exposure portion 110 pass.

The terminal cover 300 is an insulating cover that is detachably provided on a side surface of the cell frame 100 and covers an exposed portion of the internal connection terminal 200 exposed through the terminal exposure portion 110 to block it from the outside. The terminal cover 300 is detachably fastened to the bolt fastening portion 120 of the terminal exposure portion 110 by a fastening bolt 500.

The terminal cover 300 may include a plate-shaped cover portion 310 that covers the terminal exposure portion 110 and is formed with a terminal through hole 311 through which the external connection terminal 400 passes from the rear to the front, and a terminal fastening portion 320 protruding forward from a front surface of the cover portion 310, the external connection terminal 400 being fastened to the terminal fastening portion 320.

The cover portion 310 is formed in a quadrangular plate shape, and comes close contact with a periphery of the terminal exposure portion 110 on an outer side of the cell frame 100 when the terminal cover 300 is fixed to the side surface of the cell frame 100 by the fastening bolt 500. A first bolt through hole 312 through which a threaded portion of the fastening bolt 500 passes is formed below the terminal fastening portion 320 in the cover portion 310. For reference, the fastening bolt 500 may include a head portion and a threaded portion having threads formed thereon.

The terminal fastening portion 320 may extend perpendicularly from the front surface of the cover portion 310. A terminal seating groove 321 in which a front end portion of the external connection terminal 400 is seated is formed on an upper surface of the terminal fastening portion 320. The terminal fastening portion 320 is formed with a nut insertion groove 322 into which a fastening nut 600 described below is inserted to electrically connect an external component using a bolt-type fastening member (not illustrated) while fastening the external connection terminal 400 to the terminal fastening portion 320.

The terminal through hole 311 of the cover portion 310 may be formed at a portion where the cover portion 310 and the terminal fastening portion 320 meet.

Note that the terminal cover 300 may be manufactured as a left-type terminal cover or a right-type terminal cover depending on positions of the terminal fastening portion 320 and the first bolt through hole 312. As illustrated in FIG. 11, the terminal cover 300 in which the terminal fastening portion 320 and the first bolt through hole 312 are formed on the left side of the cover portion 310 may be referred to as a left-type terminal cover, and as illustrated in FIG. 12, the terminal cover 300 in which the terminal fastening portion 320 and the first bolt through hole 312 are formed on the right side of the cover portion 310 may be referred to as a right-type terminal cover.

When the cover portion 310 of the left-type terminal cover and the cover portion 310 of the right-type terminal cover overlap with each other, the terminal fastening portions 320 and the first bolt through holes 312 of the two terminal covers are symmetrical in the left-and-right direction. In addition, the first bolt through hole 312 formed in the cover portion 310 of the left-type terminal cover and the first bolt through hole 312 formed in the cover portion 310 of the right-type terminal cover may be formed at positions corresponding to the pair of fastening portion through holes 210 formed in the internal connection terminal 200 and the pair of bolt fastening portions 120 provided in the terminal exposure portion 110.

The external connection terminal 400 is an L-shaped busbar, and includes a first connection portion 410 connected to the internal connection terminal 200 and a second connection portion 420 exposed forward of the terminal cover 300 and electrically connected to an external component. The first and second connection portions 410 and 420 are formed integrally with each other while forming a right angle. To this end, a flat plate-shaped connection portion may be bent into an L shape to form the external connection terminal 400.

The first connection portion 410 is arranged on a rear surface of the cover portion 310 of the terminal cover 300, and the second connection portion 420 passes through the terminal through hole 311, is seated in the terminal seating groove 321 of the terminal fastening portion 320, and is then fastened with a fastening nut 600.

A second bolt through hole 411 through which the threaded portion of the fastening bolt 500 passes is formed in the first connection portion 410, and a nut through hole 421 through which the fastening nut 600 passes is formed in the second connection portion 420.

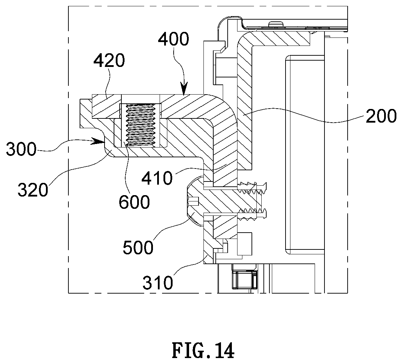

FIG. 14 is a cross-sectional view illustrating a state in which the terminal cover is mounted to the cell frame.

When the terminal cover 300 is fixed to the cell frame 100 with the external connection terminal 400 fastened to the terminal cover 300, the first connection portion 410 of the external connection terminal 400 is connected to the internal connection terminal 200.

In this case, the threaded portion of the fastening bolt 500 passes through the first bolt through hole 312 of the terminal cover 300 and the second bolt through hole 411 of the first connection portion 410, and is then detachably screw-fastened to the bolt fastening portion 120 of the terminal exposure portion 110, thereby fixing the terminal cover 300 to the side surface of the cell frame 100 and connecting the external connection terminal 400 to the internal connection terminal 200.

Note that the fastening nut 600 passes through the nut through hole 421 of the external connection terminal 400 and is then inserted into the nut insertion groove 322 of the terminal cover 300, thereby fastening the external connection terminal 400 to the terminal cover 300. The upper surface of the second connection portion 420 of the external connection terminal 400 is exposed to the outside, and an external component may be electrically connected to this exposed portion.

To connect the external component to the upper surface of the second connection portion 420, a threaded portion of a separate bolt-type fastening member is fitted into a hole formed in the external component and then screw-fastened to the fastening nut 600 through the nut through-hole 421 of the second connection portion 420, thereby firmly connecting the external component to the second connection portion 420.

Although the battery cell assembly according to the preferred exemplary embodiment of the present disclosure, and the battery pack and the vehicle including the battery cell assembly have been described in detail with reference to the accompanying drawings, the present disclosure is not limited to the above-described exemplary embodiment and may be implemented in various modified forms within the scope of the claims.

From the foregoing, it will be appreciated that various exemplary embodiments of the present disclosure have been described herein for purposes of illustration, and that various modifications may be made without departing from the scope and spirit of the present disclosure. Accordingly, the various exemplary embodiments disclosed herein are not intended to be limiting, with the true scope and spirit being indicated by the following claims.

### <Explanation of Reference Numerals and Symbols>

| | | | |
|---|---|---|---|
| 1: | vehicle | 10: | battery pack |
| 20: | battery cell assembly | 30: | pack case |
| 100: | cell frame | 110: | terminal exposure portion |
| 120: | bolt fastening portion | 121: | circular protrusion |
| 122: | nut | 200: | internal connection terminal |
| 210: | fastening portion through hole | 300: | terminal cover |
| 310: | cover portion | 311: | terminal through hole |
| 312: | first bolt through hole | 320: | terminal fastening portion |
| 321: | terminal seating groove | 322: | nut insertion groove |
| 400: | external connection terminal | 410: | first connection portion |
| 411: | second bolt through hole | 420: | second connection portion |
| 421: | bolt through hole | 500: | fastening bolt |
| 600: | fastening nut | | |

## Claims

1. A battery cell assembly comprising:
a cell frame configured to accommodate one or more battery cells therein;
an internal connection terminal electrically connected to the battery cells and exposed to the outside through a side surface of the cell frame;
a terminal cover configured to be detachably mounted to the side surface of the cell frame and to cover the internal connection terminal; and
an external connection terminal mounted on the terminal cover and having a rear end portion connected to the internal connection terminal at the rear of the terminal cover and a front end portion exposed forward of the terminal cover,
wherein the terminal cover is formed in one of at least two types with different mounting positions of the external connection terminal and is selectively mounted to the cell frame.

2. The battery cell assembly of claim 1, wherein the terminal cover is an insulating cover configured to block the internal connection terminal from the outside.

3. The battery cell assembly of claim 1, wherein a terminal exposure portion having a groove shape and configured to expose the internal connection terminal to the outside is formed on the side surface of the cell frame.

4. The battery cell assembly of claim 3, wherein
the external connection terminal comprises
a first connection portion connected to the internal connection terminal, and
a second connection portion connected to the first connection portion and exposed forward of the terminal cover.

5. The battery cell assembly of claim 4, wherein the external connection terminal is an L-shaped busbar.

6. The battery cell assembly of claim 4, wherein the terminal cover is provided in one of two types of a left type in which the external connection terminal is arranged on a left side, and a right type in which the external connection terminal is arranged on a right side, with either type selectively covering the internal connection terminal.

7. The battery cell assembly of claim 6, wherein
the terminal cover comprises
a plate-shaped cover portion configured to cover the terminal exposure portion and having a terminal through hole formed therein through which the second connection portion passes from the rear to the front, and
a terminal fastening portion protruding forward from a front surface of the cover portion, the second connection portion being fastened to the terminal fastening portion.

8. The battery cell assembly of claim 7, wherein the terminal cover is detachably fixed to the cell frame by a bolt-type fastening member.

9. The battery cell assembly of claim 8, wherein the terminal cover is formed with a first bolt through hole through which a threaded portion of the fastening member passes, and the terminal exposed portion is formed with a bolt fastening portion to which the threaded portion is screw-fastened.

10. The battery cell assembly of claim 9, wherein the external connection terminal is formed with a second bolt through hole through which the threaded portion of the fastening member passes, and the threaded portion of the fastening member passes through the first and second bolt through holes in sequence and is then fastened to the bolt fastening portion.

11. The battery cell assembly of claim 10, wherein the bolt fastening portion is provided as a pair and is formed symmetrically in a left-and-right direction in the terminal exposure portion.

12. The battery cell assembly of claim 11, wherein the left-type terminal cover and the external connection terminal are fastened to a left bolt fastening portion of the pair of bolt fastening portions, and the right-type terminal cover and the external connection terminal are fastened to a right bolt fastening portion of the pair of bolt fastening portions.

13. A battery pack comprising:
a pack case; and
the battery cell assemblies of any one of claims 1 to 12 stacked vertically in the pack case.

14. The battery pack of claim 13, wherein the external connection terminal of the upper-layer battery cell assembly and the external connection terminal of the lower-layer battery cell assembly are arranged in a left-right staggered manner.

15. A vehicle comprising the battery pack of claim 14.
